# FASCICULE DE BREVET EUROPEEN

(11) **EP 0 418 132 B1**
(45) Date de publication et mention de la délivrance du brevet: **13.04.1994**
(21) Numéro de dépôt: 90402477.5
(22) Date de dépôt: 10.09.1990
(51) Int. Cl.: G01S 17/02

(54) **Dispositif pour la détection de cibles**
Gerät zur Ermittlung von Zielen
Apparatus for target detection

(30) Priorité: 13.09.1989 FR 8911973
(43) Date de publication de la demande: 20.03.1991
(73) Titulaire: AEROSPATIALE Société Nationale Industrielle, 75781 Paris Cédex 16 (FR)
(72) Inventeur: Maffert, Jérôme, F-75116 Paris (FR); Bardelle, Philippe, F-78140 Velizy (FR); Bernard, Michel, F-91000 Evry (FR)
(74) Mandataire: Bonnetat, Christian

(56) Documents cités:
- EP-A- 0 035 101
- EP-A- 0 167 432
- EP-A- 0 307 677
- DE-A- 2 851 205
- FR-A- 2 542 863
- GB-A- 2 035 007
- US-A- 4 155 096

## Description

La présente invention concerne un dispositif pour la détection de cibles susceptibles d'apparaître dans un champ surveillé, notamment destiné à détecter et à poursuivre des mobiles pouvant être hostiles, à partir d'un point d'observation. Ces mobiles peuvent être, par exemple, des aéronefs ou des missiles. Le dispositif de détection peut être disposé au sol, ou embarqué à bord d'un véhicule ou d'un navire. Il est destiné à être couplé à un armement, dont le but est de détruire le ou les mobiles hostiles détectés.

Les qualités techniques que l'on est en droit d'attendre d'un tel dispositif sont :
- une bonne portée de détection ;
- une bonne probabilité de détection ;
- un faible taux de fausses alarmes ;
- une vitesse élevée de renouvellement des informations.

On connaît déjà des systèmes de veille utilisant en général une optique et un ensemble de détecteurs adaptés spécifiquement au besoin de la veille, ce qui entraîne des coûts importants. La discrimination entre les mobiles recherchés et les autres sources de rayonnement présentes dans le champ exploré se fait souvent par une analyse à bandes spectrales multiples qui rend une discrimination possible par estimation de la température apparente. Les mesures purement passives qu'ils effectuent ne donnent cependant que des informations limitées sur les cibles détectées, de sorte que le taux de fausses alarmes reste élevé.

La présente invention a pour objet de remédier à cet inconvénient.

A cette fin, selon le préambule de la revendication 1, le dispositif pour la détection de cibles susceptibles d'apparaître dans un champ surveillé comporte, montés sur un support commun orientable en gisement, une caméra thermique de veille, un télémètre laser, ainsi que des moyens de déviation en site et en gisement des faisceaux d'émission et de réception dudit télémètre. Un tel dispositif est connu par exemple du document EP-A-0 167 432.

Ainsi, le dispositif de détection selon l'invention est susceptible de mesurer la distance d'une cible potentielle et, donc la vitesse de celle-ci. Or, on sait que de telles informations sont très intéressantes pour la classification de la menace éventuelle représentée par ladite cible potentielle. Par suite, grâce à l'invention, on réduit fortement le taux de fausses alarmes.

On remarquera que grâce à ses propres moyens de déviation en site et en gisement, le télémètre laser peut être découplé, en fonctionnement, de la caméra thermique.

Ainsi, au même instant, la caméra thermique et le télémètre laser peuvent être orientés dans des directions différentes, ce qui permet à la caméra thermique de continuer un balayage régulier de veille pendant que le télémètre mesure la distance d'une cible supposée, venant juste d'être détectée par ladite caméra thermique.

Avantageusement, pour permettre les fonctionnements simultanés et indépendants de la caméra thermique et du télémètre laser, tout en évitant le parasitage de l'image de la caméra thermique par le télémètre laser, celui-ci est synchronisé avec le balayage de ladite caméra thermique, de façon que ses tirs aient lieu pendant les retours de trame de ladite caméra.

Selon la partie caractérisante de la revendication 1, ledit support commun étant animé d'un mouvement de rotation de balayage en gisement, la vitesse de ce mouvement de balayage et la fréquence de balayage en gisement de la caméra thermique sont choisies pour que chaque direction du champ surveillé soit observée par plusieurs trames successives du balayage de la caméra thermique, au cours d'une même phase dudit balayage en gisement par ledit support commun. De la sorte, on augmente la probabilité de détection d'une cible, tout en réduisant encore le taux de fausses alarmes.

De préférence, le dispositif de détection conforme à la présente invention comporte un miroir monté sur ledit support commun et interposé sur le trajet des axes optiques de ladite caméra thermique et desdits moyens de déviation du télémètre.

Il est avantageux que ledit miroir soit commandable en site. Ainsi, il permet d'explorer en site le champ d'observation, l'exploration en gisement résultant du mouvement de rotation dudit support commun.

Il est également avantageux que ledit miroir soit commandable en gisement.

Ainsi, lorsqu'une cible a été détectée et reconnue, ledit miroir peut être orienté en site et en gisement en direction de cette cible, de sorte que le miroir forme alors miroir de pointage et détermine la ligne de visée d'un armement destiné à intercepter ladite cible.

Le dispositif selon l'invention, outre sa fonction de veille, peut donc alors poursuivre ladite cible. L'invention évite donc l'utilisation d'un système spécifique de veille et d'un système spécifique de poursuite, comme cela est le cas jusqu'à présent.

De plus, du fait que ledit miroir est commandable en gisement et en site, on peut compenser l'effet des vibrations qui sont appliquées au dispositif de détection, par exemple par le porteur (aéronef, char, etc...) sur lequel est monté ledit support commun. A cet effet, il est avantageux de disposer des senseurs inertiels sur ledit support commun, de façon à pouvoir stabiliser ledit miroir à l'aide de signaux délivrés par lesdits senseurs inertiels.

Afin de faciliter encore plus la détection et l'identification des cibles potentielles, le dispositif comporte de plus une caméra de télévision montée sur ledit support commun. On peut également prévoir un équipement de guidage de missiles.

Les figures du dessin annexé feront bien comprendre comment l'invention peut être réalisée. Sur ces figures, des références identiques désignent des éléments semblables.

La figure 1 est une vue en coupe verticale axiale schématique d'un exemple de réalisation du dispositif de visée conforme à la présente invention.

La figure 2 illustre le schéma électrique synoptique de l'exemple de réalisation du dispositif de la figure 1.

La figure 3a illustre le champ propre de la caméra thermique du dispositif de la figure 1.

Les figures 3b,3c et 3d illustrent schématiquement trois variantes de balayage du champ d'observation à l'aide de la caméra thermique.

La figure 4 est un diagramme gisement-temps illustrant une partie du fonctionnement du dispositif de visée de la figure 1.

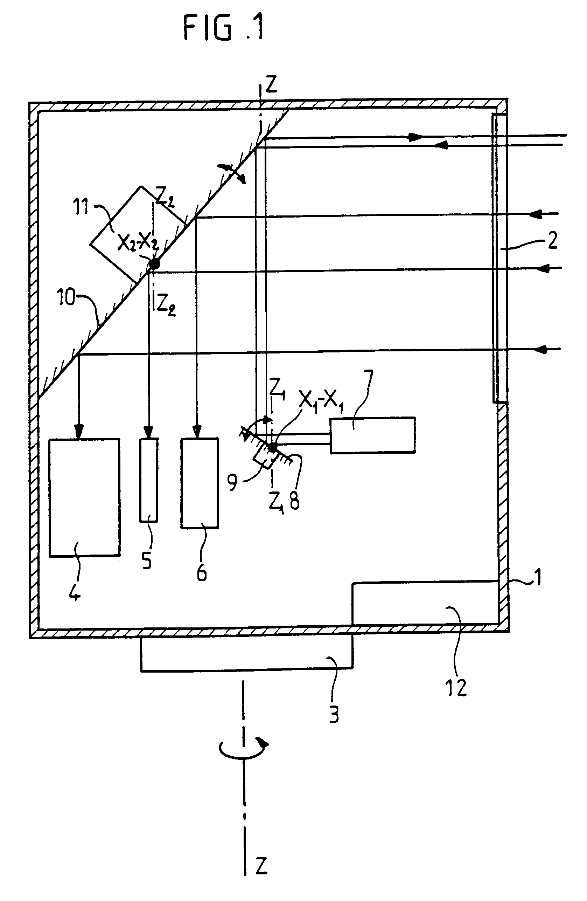

L'exemple de réalisation du dispositif de visée montré schématiquement par la figure 1, comporte un boîtier étanche 1 pourvu d'un hublot latéral 2. Le boîtier 1 peut tourner autour d'un axe vertical médian Z-Z sous l'action d'un moteur 3. Comme on le verra par la suite, l'entraînement en rotation du boîtier 1 autour de l'axe Z-Z peut être continu à vitesse constante ou bien alternatif autour d'une position moyenne. La rotation du boîtier 1 autour de l'axe Z-Z sert à l'exploration en gisement du champ à observer. Le hublot latéral 2 est sensiblement parallèle à l'axe Z-Z. A l'intérieur du boîtier 1, sont disposés une caméra thermique 4, une caméra de télévision 5, un équipement de guidage de missile 6, ainsi qu'un télémètre laser 7. Au télémètre laser 7 est associé un miroir d'exploration 8 pouvant tourner, sous l'action d'un moteur 9, autour d'un axe vertical Z₁-Z₁, ainsi qu'autour d'un axe horizontal X₁-X₁.

Par ailleurs, dans le boîtier 1 est prévu un miroir de pointage 10 relié à un moteur d'actionnement 11 pour être mobile autour d'un axe vertical Z₂-Z₂, ainsi qu'autour d'un axe horizontal X₂-X₂ parallèle à l'axe X₁-X₁.

Grâce au miroir de pointage 10, les faisceaux provenant de cibles se trouvant dans le champ d'observation atteignent les différents dispositifs 4,5,6 et 7 après traversée du hublot 2 et réflexion sur le miroir de pointage 10. De plus, le faisceau de réception du télémètre laser 7 est réfléchi sur le miroir 8, avant d'atteindre ledit télémètre laser. Le faisceau d'émission de ce dernier est réfléchi par le miroir 8 sur le miroir 10 qui dirige le faisceau vers le champ à observer à travers le hublot 2.

On conçoit aisément que par mouvement de rotation du boîtier 1 autour de l'axe Z-Z et par mouvement de rotation du miroir de pointage 10 autour de l'axe X₂-X₂, il est possible aux différents appareils 4,5,6 et 7 d'adresser et de recevoir des faisceaux avec balayage en gisement et en site.

Par ailleurs, à l'intérieur du boîtier 1 sont disposés des senseurs inertiels 12.

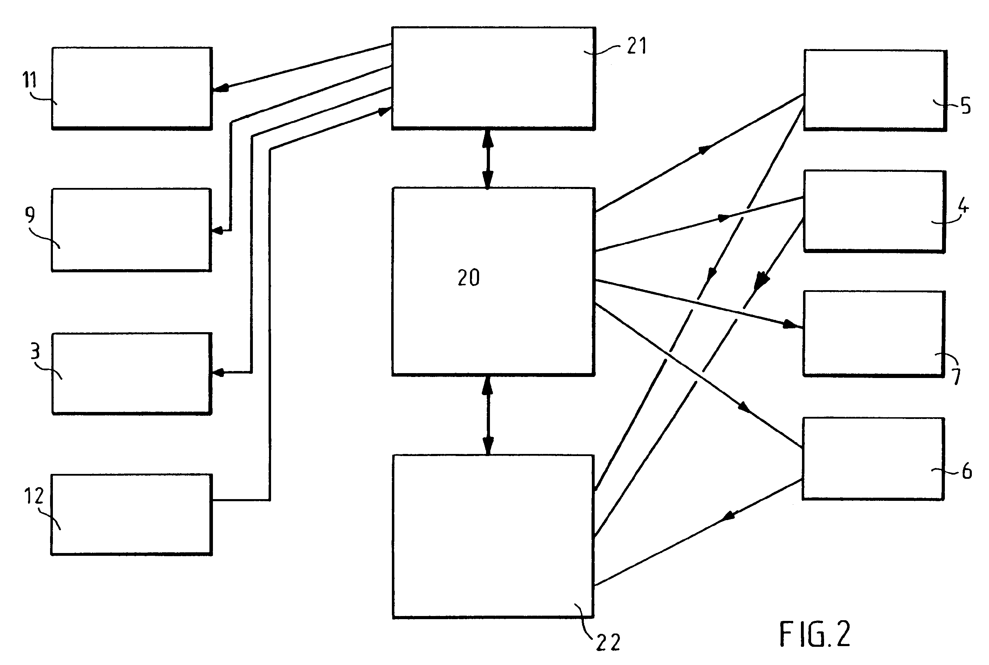

Comme le montre la figure 2, le système de commande des différents éléments comporte un dispositif électronique de gestion 20 auquel est adjoint un dispositif électronique d'asservissement 21, commandant les moteurs 3,9 et 11 et recevant des informations des senseurs inertiels 12. Le système de commande comporte de plus un dispositif électronique de traitement des images servant à la détection des cibles et à leurs poursuites. La caméra thermique 4, la caméra de télévision 5 et l'équipement de guidage de missile 6 sont commandés par le dispositif électronique de gestion 20 et adresse leurs informations au dispositif électronique de traitement des images 22. De même, le télémètre 7 est commandé par le dispositif électronique de gestion 20.

La caméra de télévision 5 est, de préférence, du type à transfert de charge (CCD) à temps d'intégration réglable.

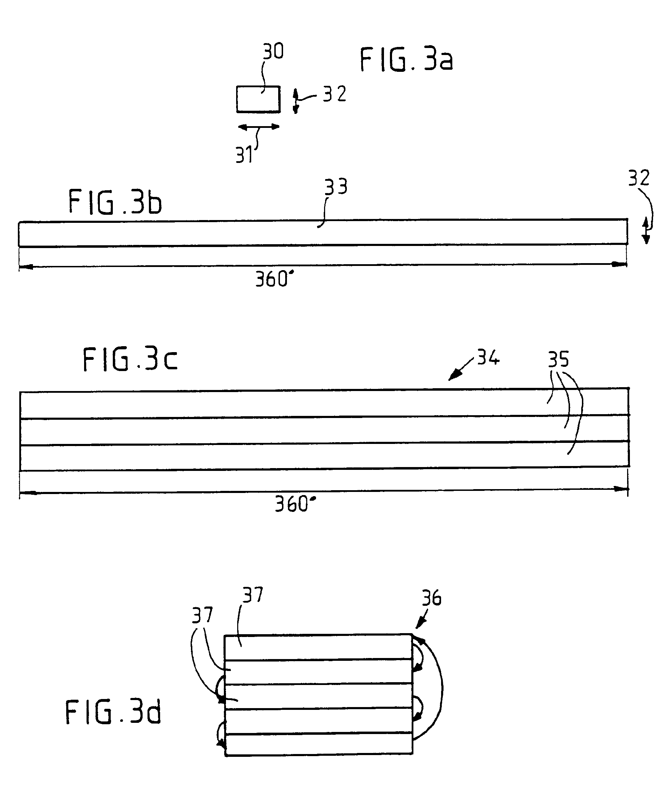

La caméra thermique 4 peut être une caméra à balayage parallèle, dont la barette de détecteurs est orientée verticalement. L'ensemble des détecteurs couvre donc le champ de la caméra en site. Le dispositif de balayage interne à la caméra assure le balayage du champ en gisement par déplacement de l'image sur la barette de détecteurs. Sur la figure 3a, on peut voir que le champ 30 de la caméra thermique 4 est un petit rectangle dont la longueur 31 (gisement) peut être de l'ordre de 4° et la hauteur 32 (site) de l'ordre de 3°.

Si le moteur 3 entraîne le boîtier 1 en rotation continue autour de l'axe Z-Z et si le miroir de pointage 10 est fixe en site, le champ exploré par la caméra thermique 4 est donc une bande 33 s'étendant sur 360° et sur une largeur identique à la largeur 32 (voir la figure 3b).

En revanche, si le miroir de pointage 10 est déplacé en rotation autour de l'axe horizontal X₂-X₂ (en site) pendant la rotation du boîtier 1 autour de l'axe Z-Z, le champ total exploré 34, en cas de rotation continue de 360° autour de l'axe Z-Z est constitué d'une pluralité de bandeaux 35 juxtaposés en site (voir la figure 3c).

Sur la figure 3d, on a représenté un champ exploré 36, non plus constitué d'un champ panoramique sur 360°, mais d'un champ sectoriel, par exemple sur 30°, composé d'une pluralité de bandeaux 37, également juxtaposés en site. Dans ce cas, le boîtier 1 est animé d'un mouvement de rotation alternatif autour de l'axe Z-Z par le moteur 3, et le miroir de pointage 10 assure l'exploration en site suivant les bandeaux 37.

Il va de soi que l'exploration à l'intérieur de la bande 33 et des bandeaux 35 et 36 est réalisée par le dispositif de balayage interne à la caméra, de la façon mentionnée ci-dessus.

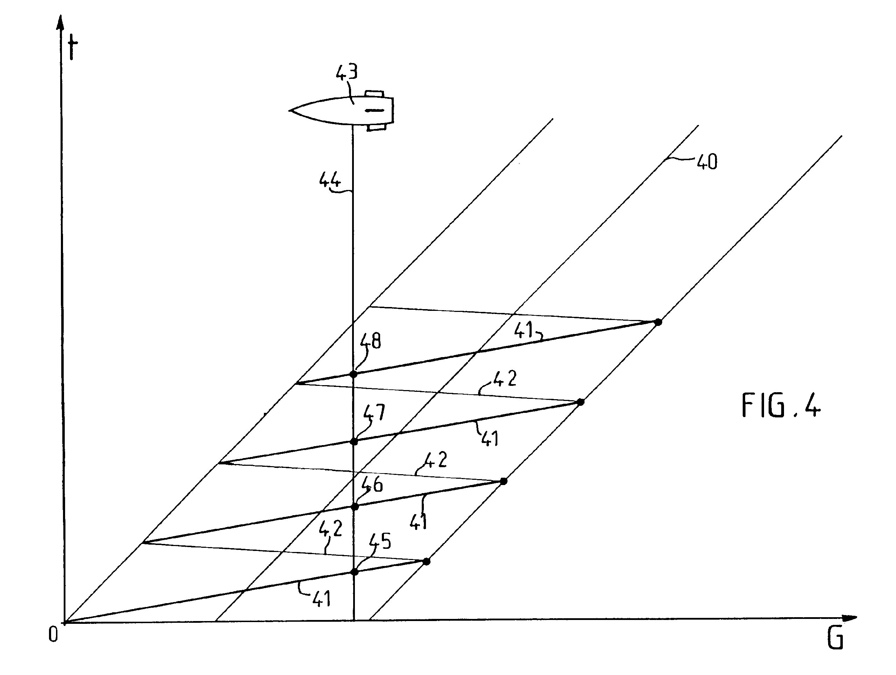

Le télémètre laser 7 permet d'effectuer des mesures par exemple toutes les 40 millisecondes (25 Hz), au moins pendant une courte durée. Il est synchronisé avec le balayage de la caméra thermique pour effectuer ses tirs pendant les retours trame, afin d'éviter de parasiter l'image de la caméra thermique, comme cela apparaît de la figure 4.

Le miroir 8 de déviation du télémètre a un débattement en site et gisement permettant de déplacer la direction de télémétrie dans tout le champ de la caméra thermique 4. Dans la position médiane du débattement du miroir 8, la direction de télémétrie est parallèle à la direction correspondant au centre du champ de la caméra thermique.

Le dispositif électronique 21 et les senseurs inertiels 12 forment un dispositif de stabilisation assurant la stabilisation des lignes de visée pour les isoler des vibrations induites par le porteur (non représenté) du boîtier 1 et des mouvements de ce dernier.

Ainsi, le miroir de pointage 10 est gyrostabilisé et il assure la stabilisation, le balayage en site et un balayage couverture réduit en gisement.

En veille, la motorisation en gisement (essentiellement le moteur 3) associée au mouvement en site du miroir gyrostabilisé 10 permet de couvrir, par balayages de bandeaux 35,36 en gisement successifs un champ de veille panoramique 34 ou sectoriel 36. Ce champ de veille est adapté au contexte opérationnel et résulte d'un compromis entre ses dimensions et la durée avant renouvellement des informations.

Le balayage continu en gisement de l'ensemble, qui se superpose au balayage alternatif de son champ par le dispositif interne à la caméra thermique (50 Hz), crée une sorte de balayage en dent de scie du champ dans le sens horizontal, comme cela est illustré par la figure 4 par laquelle on a représenté la variation du gisement G en fonction du temps t. Sur cette figure, la ligne 40 représente le mouvement du centre du champ observé par suite de la rotation du boîtier 1 autour de l'axe Z-Z. A ce balayage d'ensemble se superpose le balayage propre, interne à la caméra thermique 4. Ce dernier balayage s'effectue pendant des trames successives 41. Si les vitesses respectives du balayage d'ensemble (moteur 3) et du balayage interne à la caméra thermique 4 sont judicieusement choisies, on peut observer un même objet 43, qui se trouve dans une direction 44, plusieurs fois (par exemple quatre fois en 45,46,47 et 48) au cours d'une même exploration angulaire du balayage d'ensemble. Ceci permet de détecter une cible 43 dans plusieurs images successives et donc d'augmenter la probabilité de détection tout en réduisant le nombre de fausses alarmes. Il est également possible de détecter une cible ayant un mouvement angulaire rapide et de commencer à prédire sa trajectoire.

Pour éliminer encore plus les fausses alarmes et pour procéder à une classification des menaces, ou mesure la distance des cibles. Ceci se fait en pointant (dispositif 21) le télémètre 7 au moyen de son propre dispositif de pointage 8,9 sur la direction 44 de la cible 43 telle qu'elle vient d'être déterminée, en compensant le mouvement de balayage d'ensemble. La télémétrie se fait donc "au vol", sans interrompre le balayage de veille, donc sans perte de temps. Suivant un aspect important de la présente invention, la commande du télémètre 7 par le dispositif électronique de gestion 20 est faite de façon que ses tirs s'effectuent pendant les retours de trame 42 du balayage de la caméra thermique 4 (voir la figure 4).

La détection de la cible 43 est effectuée par le dispositif électronique de traitement des images 22 qui travaille sur les signaux issus de la caméra thermique 4 ; les cibles potentielles sont extraites, leur mouvement angulaire est détecté et la télémétrie est commandée, tout cela au cours du même balayage d'ensemble (durée inférieure à 80 ms). Pour la détection de cible on utilise également l'image en provenance de la caméra de télévision 5 (dont le temps d'intégration est réglé très court pour éviter un effet de bougé). On peut ainsi lever des fausses alarmes ; en effet, les cibles et les brouilleurs n'ont en général pas la même signature à la fois dans les bandes spectrales de la caméra thermique 4 et de la caméra de télévision 5.

La poursuite de la cible est enclenchée dès que celle-ci a été choisie, de la façon décrite ci-dessus, dans le mode "veille".

L'orientation de la ligne de visée se fait au moyen du miroir de pointage 10, en site et gisement. La motorisation d'ensemble suit les mouvements en gisement de grande amplitude. L'observation et la poursuite se font à l'aide des caméras thermique et de télévision (réglage normal), soit en poursuite manuelle (tireur actionnant un manche), soit en mode automatique (poursuite automatique effectuée par l'électronique de traitement des images). Les mesures de distance se font à l'aide du télémètre laser, qui peut mesurer la distance de la cible visée et, le cas échéant, celle du missile lancé (pointage par le miroir du télémètre).

Bien que, dans l'exemple de réalisation décrit ci-dessus, on ait prévu une caméra thermique 4 à balayage parallèle, il va de soi que le dispositif selon l'invention peut fonctionner avec des caméras utilisant n'importe quel nombre et disposition de détecteurs, y compris des ensembles de détection bi-ou multi-spectraux. Il y a bien sûr une limitation si le temps d'intégration des détecteurs devient long par rapport à la vitesse de balayage d'ensemble.

Le télémètre laser 7 peut présenter n'importe quelle longueur d'onde. Plus sa cadence d'utilisation est élevée, plus sont nombreuses les possibilités de télémétrer de nombreuses cibles pendant une séquence de veille. Plusieurs mesures successives sur une même cible permettront d'estimer la vitesse radiale de celle-ci. L'utilisation de télémètres à détection cohérente permet de mesurer la vitesse de la cible d'une façon pratiquement instantanée en exploitant le glissement en fréquence dû à l'effet Doppler. Le dispositif du pointage 8,9 du télémètre 7 peut être tout dispositif optique ou mécanique permettant de déplacer les faisceaux d'émission et de réception du télémètre d'un angle connu par rapport à l'axe de la caméra thermique.

## Revendications

1. Dispositif pour la détection de cibles (43) susceptibles d'apparaître dans un champ surveillé, comprenant, montés sur un support commun (1) orientable en gisement, une caméra thermique (4), un télémètre laser (7), ainsi que des moyens (8,9) de déviation en site et en gisement des faisceaux d'émission et de réception dudit télémètre, ledit support commun étant animé d'un mouvement de balayage en gisement,
caractérisé en ce que la vitesse dudit mouvement de balayage en gisement dudit support commun et la fréquence de balayage en gisement de ladite caméra thermique sont choisies pour que chaque direction du champ surveillé soit observée par plusieurs trames successives du balayage de caméra, au cours d'une même phase dudit balayage en gisement par ledit support commun.

2. Dispositif selon la revendication 1,
caractérisé en ce que ledit télémètre laser (7) est synchronisé avec le balayage de ladite caméra thermique (4) de façon que ses tirs aient lieu pendant les retours de trame (42) de celle-ci.

3. Dispositif selon l'une quelconque des revendications 1 ou 2,
caractérisé en ce qu'il comporte un miroir (10) monté sur ledit support commun (1) et interposé sur le trajet des axes optiques de ladite caméra thermique (4) et desdits moyens de déviation (8,9).

4. Dispositif selon la revendication 3,
caractérisé en ce que ledit miroir (10) est commandable en site.

5. Dispositif selon l'une quelconque des revendications 3 ou 4,
caractérisé en ce que ledit miroir (10) est commandable en gisement.

6. Dispositif selon l'une quelconque des revendications 3 à 5,
caractérisé en ce qu'il comporte des senseurs inertiels (12) montés sur ledit support commun (1), servant à stabiliser ledit miroir.

7. Dispositif selon l'une quelconque des revendications 1 à 6,
caractérisé en ce qu'il comporte une caméra de télévision (5), montée sur ledit support commun (1).

8. Dispositif selon l'une quelconque des revendications 1 à 7,
caractérisé en ce qu'il comporte un équipement de guidage de missile (6) monté sur ledit support commun (1).

## Patentansprüche

1. Vorrichtung für die Erfassung von Zielen (43), die in einem überwachten Feld auftreten können, mit einer Wärmebildkamera (4), einem Laserentfernungsmesser (7) sowie Einrichtungen (8, 9) zur Ablenkung in die Höhe und zur seitlichen Ablenkung von ausgesendeten und empfangenen Strahlungsbündeln des genannten Entfernungsmessers, die auf einem gemeinsamen Träger (1) aufgebracht sind, wobei der genannte gemeinsame Träger durch eine seitliche Abtastbewegung angetrieben wird, gekennzeichnet dadurch, daß die Geschwindigkeit der genannten seitlichen Abtastbewegung des genannten gemeinsamen Trägers und die seitliche Abtastfrequenz der genannten Wärmebildkamera so gewählt sind, daß jede Richtung des überwachten Feldes von mehreren nacheinander-folgenden Rastern der Kameraabtastung im Verlauf ein und derselben Phase der genannten seitlichen Abtastung durch den genannten gemeinsamen Träger beobachtet wird.

2. Vorrichtung nach Anspruch 1,
gekennzeichnet dadurch, daß der genannte Laserentfernungsmesser (7) mit der Abtastung der Wärmebildkamera (4) synchronisiert wird, in der Form, daß seine Impulse während der Rasterrückläufe (42) der Kamera erfolgen.

3. Vorrichtung nach einer der Ansprüche 1 oder 2,
gekennzeichnet dadurch, daß sie einen Spiegel (10) aufweist, der auf den gemeinsamen Träger (1) aufgebracht ist und in den Verlauf der optischen Achsen der Wärmebildkamera (4) und den genannten Ablenkungseinrichtungen (8, 9) des Entfernungsmessers eingesetzt ist.

4. Vorrichtung nach Anspruch 3,
gekennzeichnet dadurch, daß der genannte Spiegel (10) in die Höhe steuerbar ist.

5. Vorrichtung nach einer der Ansprüche 3 oder 4,
gekennzeichnet dadurch, daß dieser Spiegel (10) seitlich steuerbar ist.

6. Vorrichtung nach einem der Ansprüche 3 bis 5,
gekennzeichnet dadurch, daß sie Trägheitssensoren (12) aufweist, die auf den gemeinsamen Träger (1) aufgebracht sind und der Stabilisierung des genannten Spiegels dienen.

7. Vorrichtung nach einem der Ansprüche 1 bis 6,
gekennzeichnet dadurch, daß sie eine auf den genannten gemeinsamen Träger (1) aufgebrachte Fernsehkamera (5) aufweist.

8. Vorrichtung nach einem der Ansprüche 1 bis 7,
gekennzeichnet dadurch, daß sie eine auf den genannten gemeinsamen Träger (1) aufgebrachte Einrichtung zur Lenkung von Lenkwaffen (6) aufweist.

## Claims

1. Device for the detection of targets (43) which may appear within a surveyed field comprising, mounted on a common support (1) which is orientable in relative bearing, a thermal camera (4), a laser rangefinder (7) and means (8, 9) for deflecting in elevation and in relative bearing the emission and reception beams of said rangefinder, said common support being driven to execute a scanning movement in relative bearing, characterized in that the speed of said scanning movement in relative bearing of said common support and the scanning frequency in relative bearing of said thermal camera are selected in order that each direction of the surveyed field should be observed by a plurality of successive frames of the camera scanning, in the course of one and the same phase of said scanning in relative bearing by said common support.

2. Device according to Claim 1, characterized in that said laser rangefinder (7) is synchronized with the scanning of said thermal camera (4) in such a manner that its shots take place during the frame returns (42) of the latter.

3. Device according to either of Claims 1 or 2, characterized in that it includes a mirror (10) mounted on said common support (1) and interposed on the trajectory of the optical axes of said thermal camera (4) and of said deflecting means (8, 9).

4. Device according to Claim 3, characterized in that said mirror (10) is commandable in elevation.

5. Device according to either of Claims 3 or 4, characterized in that said mirror (10) is commandable in relative bearing.

6. Device according to any one of Claims 3 to 5, characterized in that it includes inertial sensors (12) mounted on said common support (1), serving to stabilize said mirror.

7. Device according to any one of Claims 1 to 6, characterized in that it includes a television camera (5) mounted on said common support (1).

8. Device according to any one of Claims 1 to 7, characterized in that it includes a missile guidance equipment (6) mounted on said common support (1).
